# EUROPEAN PATENT SPECIFICATION

(11) **EP 4 345 581 B1**
(45) Date of publication and mention of the grant of the patent: **28.01.2026**
(21) Application number: 22198489.1
(22) Date of filing: 28.09.2022
(51) Int. Cl.: G06F 3/01, G10L 15/22, H04L 12/28, G06F 3/16

(54) **APPARATUS, METHODS, AND COMPUTER PROGRAMS FOR CONTROLLING DEVICES**
VORRICHTUNG, VERFAHREN UND COMPUTERPROGRAMME ZUR STEUERUNG VON VORRICHTUNGEN
APPAREIL, PROCÉDÉS ET PROGRAMMES INFORMATIQUES POUR COMMANDER DES DISPOSITIFS

(43) Date of publication of application: 03.04.2024
(73) Proprietor: Nokia Technologies Oy, 02610 Espoo (FI)
(72) Inventor: Wright, Christopher, London E15 4AD (GB); McDonald, Rory, Cambridge CB22 4PN (GB)
(74) Representative: Swindell & Pearson Limited

(56) References cited:
- WO-A1-2019/041856
- WO-A1-2020/246844
- CN-A- 110 808 889
- CN-A- 112 037 787
- CN-B- 108 667 697
- US-A1- 2020 356 178
- US-A1- 2020 382 336
- US-B2- 9 472 205

## Description

### TECHNOLOGICAL FIELD

Examples of the disclosure relate to apparatus, methods, and computer programs for controlling devices. Some relate to apparatus, methods, and computer programs for controlling devices based on detected network traffic activity.

### BACKGROUND

User devices such as augmented reality devices or smart devices can be controlled using gesture inputs. The gesture inputs can be a user moving part of their body such as a hand or arm or making a voice input. The gesture inputs do not need to involve the user making physical contact with the user device. As such gesture inputs could potentially be detected by other devices in the vicinity of the user device. If such gesture inputs are detected by the unintended devices and/or are interpreted incorrectly this can cause incorrect functions to be performed by the user devices and/or any other devices in vicinity of the user device.

WO 2020/246844 A1, WO 2019/041856 A1, US 2020/382336 A1, CN 112 037 787 A, US 9472205 B2, CN 110 808 889 A, CN 108 667 697 B, and US 2020/356178 A1 provide background in the present technological field.

### BRIEF SUMMARY

According to a first aspect of the present invention there is provided an apparatus comprising means for:
detecting network traffic activity wherein the network traffic activity is indicative of one or more actions performed by at least one network device;
identifying a user input made by a user of a user device wherein the at least one network device is different to the user device and wherein the user input is made in a time interval before the detected network traffic activity;
determining a user intent of the one or more actions performed by the at least one network device by comparing the identified user input and detected network traffic activity with data relating to user inputs and associated expected network traffic activity stored in a database, wherein determining a user intent comprises comparing the identified user input with a first user input for controlling the user device and a second user input for controlling at least the at least one network device so as to generate the detected network traffic activity to determine whether the identified user input is more closely matched to the first user input or the second user input; and
controlling an output of the user device based on the determined user intent.

The output may comprise enabling a user input used to control an action of the user device to be changed to a different user input.

The output may be configured to provide one or more suggested user inputs that have a similarity level below a threshold compared to the identified user input.

The output may comprise providing an alert to the user of the user device indicative of an action being determined as unintentional.

The user input may be identified by comparing user inputs made in the time interval before the detected network traffic activity to the data relating to user inputs that is stored in a database.

The user input may comprise at least one of; a voice input, a gesture input.

The detected network traffic activity may comprise one or more of: number of data packets, length of data packets, timing of data packets, rise times of data packets, fall times of data packets.

The detected network traffic activity may comprise one or more of: 5G signals, WiFi signals, Bluetooth signals, Bluetooth low energy signals.

The means may be for identifying the one or more actions corresponding to the detected network traffic activity by comparing the detected network traffic activity with one or more network traffic activity profiles.

The means may be for identifying a network device based on the detected network traffic activity.

The means may be for identifying the one or more actions corresponding to the detected network traffic activity by using signals from one or more sensors.

The means may be for generating the database comprising the user inputs and corresponding network traffic activity.

A machine learning model may be used to determine the user intent.

The user device may comprise a mediated reality device.

According to a second aspect of the present invention there is provided a method comprising:
detecting network traffic activity wherein the network traffic activity is indicative of one or more actions performed by at least one network device;
identifying a user input made by a user of a user device wherein the at least one network device is different to the user device and wherein the user input is made in a time interval before the detected network traffic activity;
determining a user intent of the one or more actions performed by the at least one network device by comparing the identified user input and detected network traffic activity with data relating to user inputs and associated expected network traffic activity stored in a database, wherein determining a user intent comprises comparing the identified user input with a first user input for controlling the user device and a second user input for controlling at least the at least one network device so as to generate the detected network traffic activity to determine whether the identified user input is more closely matched to the first user input or the second user input; and
controlling an output of the user device based on the determined user intent.

According to a third aspect of the present invention there is provided a computer program comprising computer program instructions that, when executed by processing circuitry, cause:
detecting network traffic activity wherein the network traffic activity is indicative of one or more actions performed by at least one network device;
identifying a user input made by a user of a user device wherein the at least one network device is different to the user device and wherein the user input is made in a time interval before the detected network traffic activity;
determining a user intent of the one or more actions performed by the at least one network device by comparing the identified user input and detected network traffic activity with data relating to user inputs and associated expected network traffic activity stored in a database, wherein determining a user intent comprises comparing the identified user input with a first user input for controlling the user device and a second user input for controlling at least the at least one network device so as to generate the detected network traffic activity to determine whether the identified user input is more closely matched to the first user input or the second user input; and
controlling an output of the user device based on the determined user intent.

According to a fourth aspect of the present invention there is provided a system comprising:
a processing device comprising an apparatus according to the first aspect of the present invention; and
a user device comprising means for:
   collecting data relating to detected user inputs;
   providing the collected data relating to detected user inputs to the processing device to enable the collected data to be analysed to determine a user intent; and
   receiving an input based on the determined user intent.

The means may be for obtaining data relating to network traffic activity wherein the network traffic activity is indicative of one or more actions performed by at least one network device and providing the data relating to the detected network traffic activity to the one or more processing devices to enable the data relating to the detected network traffic activity to be analysed to determine the user intent.

The means may be for enabling one or more user inputs that are used to control the user device to be adjusted to increase the differentiability between the one or more user inputs used to control the user device and one or more inputs used to control at least the at least one network device.

According to various, but not necessarily all, examples of the disclosure there may be provided a method comprising:
collecting data relating to detected user inputs;
providing collected data relating to detected user inputs to at least one processing device to enable the collected data to be analysed to determine a user intent; and
receiving an input based on the determined user intent.

According to various, but not necessarily all, examples of the disclosure there may be provided a computer program comprising computer program instructions that, when executed by processing circuitry, cause:
collecting data relating to detected user inputs;
providing collected data relating to detected user inputs to at least one processing device to enable the collected data to be analysed to determine a user intent; and
receiving an input based on the determined user intent.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example network;
FIG. 2 shows an example method;
FIG. 3 shows another example method;
FIG. 4 shows another example method;
FIG. 5 shows another example method;
FIG. 6 shows an example user device in use; and
FIG. 7 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

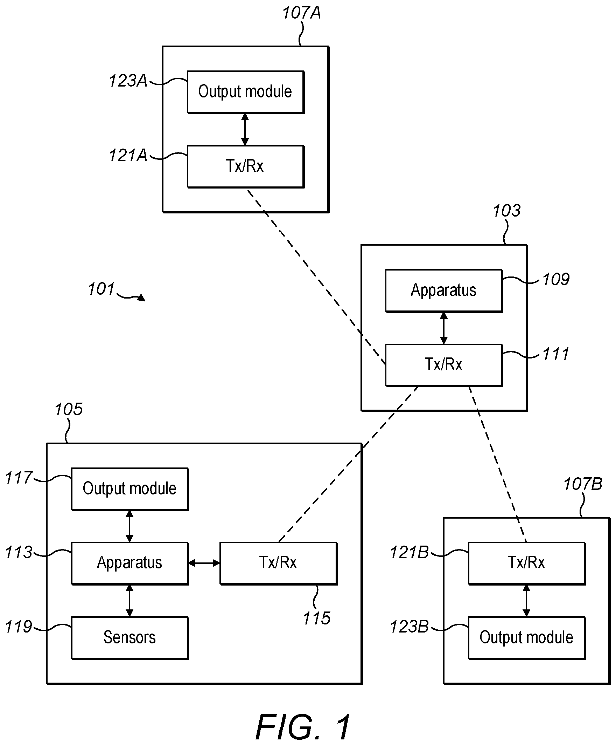

Fig. 1 shows an example network 101 that could be used to implement examples of the disclosure. The network 101 comprises a processing device 103, a user device 105 and one or more network devices 107. The example network 101 of Fig. 1 comprises one processing device 103, one user device 105 and two network devices 107. Other numbers of the respective devices could be used in some examples of the disclosure.

The network 101 can be any suitable type of network. In some examples the network 101 can be a wireless network. The respective devices 103, 105, 107 within the network 101 can be configured to communicate with each other using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol. The network 101 could be part of an internet of things (IoT) network or could be any other suitable type of network.

The devices in the network 101 could be located close to each other. For example, the devices could be located in the same room. The devices could be located close enough to enable low power communications between the respective devices.

The processing device 103 can be configured to control, at least part of, the network 101. The processing device 103 can be configured to receive inputs from the user device 105 and control one or more actions that are performed by one or more network devices 107 based on the user inputs from the user device 105. The processing device 103 could comprise a smart phone, a personal computer, a smart speaker or any other suitable type of device.

In the example of Fig. 1 the processing device 103 comprises an apparatus 109 and transmitter/receiver 111. Only components that are referred to in the following description are shown in Fig.1. Additional components could be provided in some examples of the disclosure. For example, the processing device 103 could comprise one or more sensors for detecting a gesture input.

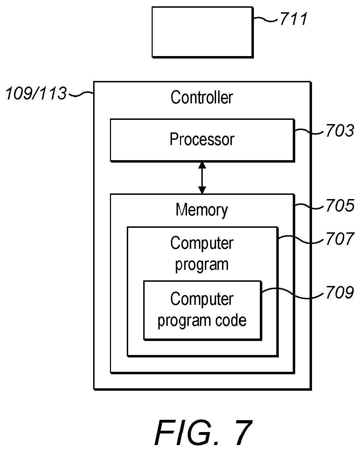

The apparatus 109 can comprise a controller comprising a processor and memory. Examples of an apparatus 109 are shown in Fig. 7. The apparatus 109 can be configured to enable control of the processing device 103. For example, the apparatus 109 can be configured to control the messages that are transmitted by the processing device 103. The apparatus 109 can also be configured to determine user intent of actions performed by network devices 107.

The transmitter/receiver 111 can comprise any means that enables the processing device 103 to communicate with other devices within the network 101. The transmitter/receiver 111 can enable wireless communications, or any other suitable type of communications, between the processing device 103 and the user device 105 and/or network devices 107.

The user device 105 can comprise a user device that belongs to, or is otherwise associated with, a user. For example, the user device 105 could be a personal electronic device such as mobile device that is typically used by only one user at a time. In some examples the user device 105 could be a mediated reality device such as an augmented reality device. In some examples the user device 105 could be a device that is worn by a user. For example, the user device 105 could comprise augmented reality glasses or a head set or any other suitable means.

In the example of Fig. 1 the user device 105 comprises an apparatus 113 and transmitter/receiver 115, an output module 117 and one or more sensors 119. Only components that are referred to in the following description are shown in Fig.1. Additional components could be provided in some examples of the disclosure.

The apparatus 113 can comprise a controller comprising a processor and memory. The apparatus 113 can be similar to the apparatus 109 of the processing device 103 or could be different. Examples of an apparatus 113 are shown in Fig. 7. The apparatus 113 can be configured to enable control of the user device 105. For example, the apparatus 113 can be configured to control the messages that are transmitted by the user device 105, and/or the functions performed by the output module 117 and/or any other functions of the user device 105.

The transmitter/receiver 115 can comprise any means that enables the user device 105 to communicate with other devices within the network 101. The transmitter/receiver 115 can enable wireless communications, or any other suitable type of communications, between the user device 105 and the processing device 103 and/or network devices 107.

The output module 117 can comprise any means that can be configured to provide an output of the user device 105. In some examples the output module 117 can be configured to provide information to a user of the user device 105. For instance, the output module 117 could comprise a display that can be configured to display information such a text or images. In some examples the output module 117 could comprise a loudspeaker or other means that can be configured to provide an acoustic output for the user. Other types of output modules 117 could be provided in some examples.

In the example of Fig. 1 the user device 105 is shown comprising just one output module 117. In some examples the user device 105 can comprise more than one output module 117. Different output modules can be configured to provide different outputs and/or functions.

The sensors 119 can comprise any means that can be configured to detect gesture user inputs made by a user of the user device 105. The type of sensors 119 that are used can depend on the type of gesture user inputs that are to be detected.

In some examples the gesture user inputs could comprise movement of the user or part of the user's body. For instance, the gesture user inputs could comprise a user making a sequence of defined movements with their arm or hand or head or any other suitable part or parts of their body. In some examples the user device 105 could be a wearable device or one that is held by the user. In such examples the sensors 119 for detecting the gesture input could comprise one or more accelerometers that could be configured to detect the movement of the user. In some examples the user device 105 could be configured to enable movement of the user to be detected through electromagnetic signals. In such examples the sensors 119 could comprise one or more suitable detectors that can detect signals reflected by the appropriate parts of the user's body. Examples of sensors 119 that could be used to detect such gestures comprise imaging sensors, LiDAR sensors, mm-wave sensors, wi-fi sensors, inertial measurement units, electromyography (EMG) sensors, or any other suitable types of sensors.

In some examples the gesture user inputs could comprise voice inputs. For example, the gesture inputs could comprise a user saying a wake-up word followed by an appropriate instruction. In such examples the sensors 119 could comprise one or more microphones or any other suitable means for detecting an acoustic signal.

The gesture user inputs can be detected without requiring the user to make physical contact with the user device 105. This could mean that the same gesture inputs could be detected by more than one device in the network 101 or could mean that a device that is not the intended device for the gesture input registers the input.

In the example of Fig. 1 the network 101 comprises two network devices 107A, 107B. Other numbers of network devices 107 could be comprised in the network 101 in other examples.

The network devices 107 are a different device to the user device 105.

In the example of Fig. 1 the respective network devices 107A, 107B comprise a transmitter/receiver 121A, 121B and an output module 123A, 123B. Only components that are referred to in the following description are shown in Fig.1. Additional components could be provided in some examples of the disclosure. For example, the network devices 107A, 107B could comprise sensors for detecting gesture inputs or any other suitable components.

The transmitter/receiver 121A, 121B can comprise any means that enables the network device 107A, 107B to communicate with other devices within the network 101. The transmitter/receiver 121A, 121B can enable wireless communications, or any other suitable type of communications, between the network device 107A, 107B and the processing device 103 and/or the user device 105.

The output module 123A, 123B can comprise any means that can be configured to provide an output. Different types of network devices 107A, 107B can comprise different types of output modules 123A, 123B so as to enable different types of output to be provided. For instance, in some examples a network device 107 could be configured to provide information to a user. In such cases the output module comprises a display and/or a loudspeaker and/or any other means for presenting information. In some examples the network device could be configured to control one or more household appliances or other devices or systems within the area of the network 101. In such examples the output module 123 could be configured to enable control of the one or more household appliances or devices or systems. For example, the network devices 107A, 107B could be part of a lighting system, a heating system, a kettle, an entertainment system or any other suitable device or system. In such cases the output modules 123A, 123B could be configured to enable the devices or systems, or parts of the devices or systems to be turned on or off or to perform any other suitable function. As an illustrative example a network device 107 could be a kettle that could be turned on or off by the output module 123. Other types of network devices 107 and output modules 123 could be used in some examples.

In the example of Fig. 1 the network 101 is configured so that the user device 105 communicates with the processing device 103. The processing device 103 can also communicate with the respective network devices 107A, 107B. In this example the user device 105 can communicate with the network devices 107A, 107B via the processing device 103. In some examples the network could be configured so that the user device 105 could communicate directly with one or more of the network devices 107A, 107B.

In examples of the disclosure a user could be using the user device 105. A user could be making gesture inputs to control the user device 105. However, there may be other devices, such as the network devices 107 or the processing device 103, in the environment where these could also detect the gesture and trigger an action. The action could be performed by one or more of the network devices 107.

For instance, if the user is using the user device 105 to play an augmented reality game they could make a gesture user input. This could be detected by one or more other devices within the vicinity of the user. This could then cause an untended action to be performed by one or more of the network devices 107. For instance, it could cause lights to be turned on or off or could turn a kettle on or could cause any other unintended action to be performed.

Examples of the disclosure provide apparatus, methods and computer programs for assisting with controlling actions performed by user devices and network devices. In examples of the disclosure the network traffic in the network 101 following a gesture user input is monitored. This is used to determine whether or not the actions being performed are intended or unintended.

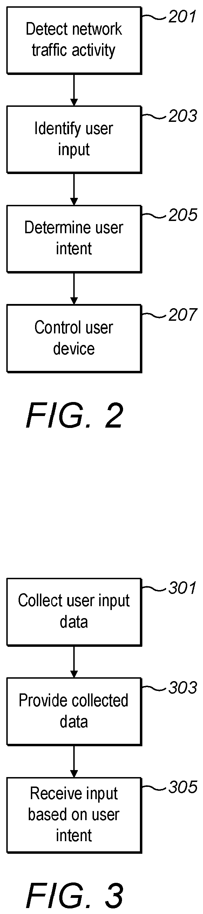

Fig. 2 shows a method in accordance with the present invention. The method could be implemented by a processing device 103 and/or a user device 105 as shown in Fig. 1 or by another other suitable apparatus or devices.

The method comprises, at block 201, detecting network traffic activity. The network traffic activity is indicative of one or more actions performed by at least one network device 107.

The network activity can be detected by any suitable device within the network 101. For instance, the network traffic activity can be detected by the processing device 103, the user device 105 or one or more of the network devices 107 or a combination of these devices.

The network activity can comprise packets or communications that can be sent between respective devices within the network 101. For example, wireless communications comprising one or more packets can be exchanged between a processing device 103 and a network device 107 or between respective network devices 107 or between any suitable devices within the network 101.

The network traffic activity that is detected can comprise one or more of: number of data packets, length of data packets, timing of data packets, rise times of data packets, fall times of data packets or any other suitable features. In some examples the network activity can comprise no traffic being sent, or the traffic indicating that no action is being performed by a network device 107.

In some examples the detected network traffic activity comprises one or more of: 5G signals, WiFi signals, Bluetooth signals, Bluetooth low energy signals or any other suitable type of signals.

The network traffic activity can provide a unique radio frequency fingerprint for a network device 107 performing a particular action. By monitoring the network traffic activity, actions being performed by one or more of the network devices 107 can be identified. In some examples a network device 107 performing the action can be identified based on the network traffic activity.

In some examples the actions of the network devices corresponding to the detected network traffic activity can be identified comparing the detected network traffic activity with one or more network traffic activity profiles. The network traffic activity profiles can be stored in a database or in any other suitable means.

At block 203 the method comprises identifying a user input made by a user of a user device 105. The at least one network device 107 is different to the user device 105. The user input can be detected by the one or more sensors 119 of the user device 105.

In some examples the user input can comprise a gesture user input. The gesture user input could comprise movement of the user device 105, movement of the user of the user device, a voice input or any other suitable type of input. In some examples the user input could be made without the user directly touching the user device 105 or without directly touching a user input device of the user device 105.

The gesture user input could, potentially, be detected by devices other than the device for which the input is intended. For instance movement of the arm of the user of the user' device could be detected by the user device 105 and also by one or more network devices in the area.

The user input is made in a time interval before the detected network traffic activity.

The user input can be identified using any suitable method or process. In some examples the user input is identified by comparing user inputs made in the time interval before the detected network traffic activity to data relating to user inputs. The data relating to user inputs can be stored in a database or any other suitable location.

At block 205 the method comprises determining a user intent of the one or more actions performed by the at least one network device 107. The user intent is determined by comparing the identified user input and detected network traffic activity with data relating to user inputs and associated expected network traffic activity stored in a database.

Determining a user intent comprises comparing the identified user input with a first user input for controlling the user device 105 and a second user input for controlling at least the at least one network device 107 so as to generate the detected network traffic activity to determine whether the identified user input is more closely matched to the first user input or the second user input. If the user input closely matches the second user input then this will be considered intentional and the action performed by the network device 107 can be allowed to proceed. If the user input does not closely match the second user input then the action performed by the network device can be considered to be unintentional and an alert or other output could be provided that could enable the actions performed by the network device 107 to be stopped or otherwise restricted.

The determination of the user input can be made using any suitable means. In some examples a machine learning model can be used to determine the user intent.

At block 207 the method comprises controlling an output of the user device 105 based on the determined user intent.

In some examples the output of the user device 105 can comprise providing an alert to the user of the user device 105. The alert can indicate to a user that an unintended action of one or more network devices 107 might have been activated. In some examples the alert could indicate the action that has been activated and/or the network device 107 that has activated the action. This can enable the user to choose whether or not to stop the actions of the network devices 107.

In some examples the output of the user device 105 can comprise enabling a user to change how the user device 105 is controlled to reduce the likelihood of unintentional actions being performed by the network devices 107.

For instance, the output could comprise enabling a user input used to control an action of the user device 105 to be changed to a different user input. The different user input can have increased differentiability to one used to control the network device 107. This can make it more unlikely that the user input used to control the user device 105 could be mistaken for one for controlling the network device 107.

To enable changing of the user inputs the output of the user device 105 can be configured to provide one or more suggested user inputs that can be selected by the user as a replacement user input. The potential replacement user inputs can have a similarity level that is below a threshold compared to an identified user input.

In some examples the network traffic activity can indicate that no action is being performed by the network device 107. This could indicate that an intended action has not been performed. In such examples an alert or opportunity to change the user inputs could also be provided to the user of the user device 105.

In the example of Fig. 2 the actions being performed, or not being performed, by the network devices 107 are identified from the network traffic data. In some examples additional information could be used to assist with the identification of the actions being performed by the network devices 107. For example, signals detected by one or more sensors could also be used. The sensors could be part of the user device 105 or part of any other suitable device within the network. For example, one or more light sensors could be used to detect if lights have been turned on or off, one or more microphones could be used to detect if a device that provides an acoustic output has been adjusted, or other signals could be detected.

Fig. 3 shows another example method. The method could be implemented by a user device 105 as shown in Fig. 1 or by another other suitable apparatus or devices.

At block 301 the method comprises collecting data relating to detected user inputs. The data could be detected by the sensors 119 of the user device 105 or by any other suitable means.

At block 303 the method comprises providing collected data relating to detected user inputs to at least one processing device 103. The provision of the data relating to the detected user inputs to the at least one processing device 103 enables the collected data to be analysed to determine a user intent.

The processing device uses the method of Fig. 2 to determine the user intent. The processing device 103 compares the user inputs to network traffic activity to determine whether or not an unintended action of a network device 107 has been activated, or if an intended action of a network device 107 has not been activated.

At block 305 the method comprises receiving an input based on the determined user intent.

In some examples the user device 105 can be configured to send additional data or information to the processing device 103. The additional data could be any data that is provided in addition to the user input data. The additional data could be used by the processing device 103 to perform methods, or parts of methods, such as the method of Fig. 2. For instance, in some examples the user device 105 could be configured to obtain data relating to network traffic activity and enable this data to be sent to the processing device 103 as additional data. The network traffic activity can be a fingerprint of the communications within the network 101 that can be used to indicate an action being performed by a network device 107. The information relating to the network traffic activity comprises additional data that can be sent to the processing device 103 to enable a user intent to be determined.

In some examples the user device 105 can be configured to enable one or more user inputs that are used to control the user device to be adjusted. The adjustment of the user inputs for the user device 105 can be intended to increase the differentiability between the user inputs that are used to control the user device 105 and one or more inputs used to control at least the network device 107. For instance, one or more new user inputs could be provided as selectable options to a user of the suer device. The selected new user inputs could be selected as having a level of differentiability above a threshold so as to reduce the likelihood of them being misinterpreted by the network 101. The user of the user device 105 could then select a preferred new user input from the available options.

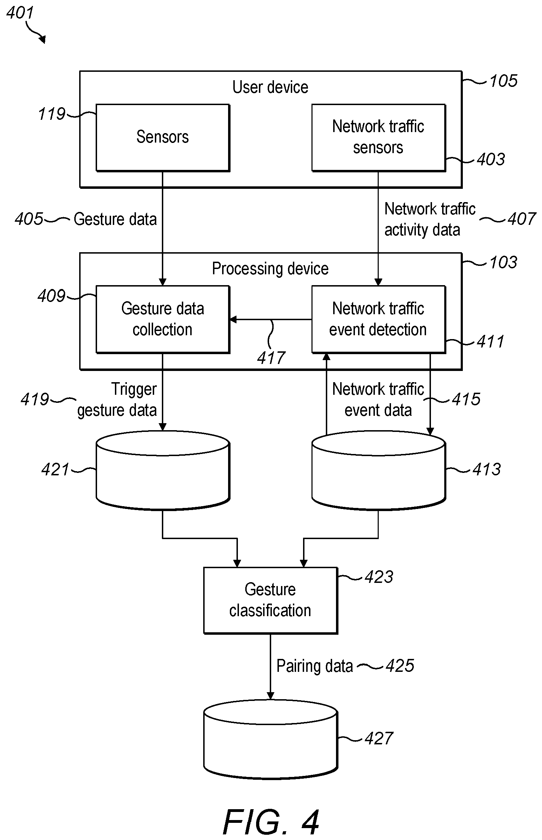

Fig. 4 schematically shows another example system 401 that could be used to implement examples of the disclosure and create a database associating network traffic activity with gesture user inputs. The example system 401 of Fig. 4 could comprise a processing device 103 and a user device 105 as shown in Fig. 1. Other types of devices and arrangements of the devices could be used in other examples. Corresponding reference numerals are used for corresponding features.

The example system of Fig. 4 can be configured to create a database that connects actions performed by network devices 107 with gesture user inputs. The connection between the actions performed by network devices 107 and the gesture user inputs is generated by analysing network traffic activity.

In the example of Fig. 4 the user device 105 comprises sensors 119 that are configured to detect a gesture input or a potential gesture input and one or more network traffic sensors 403. The user device 105 can also comprise other components that are not shown in Fig. 4. For example, the user device 105 could comprise a transmitter/receiver 115, an apparatus 113 and/or any other suitable components.

The user device 105 can be any suitable type of user device 105. In some examples the user device 105 could be a mediated reality or an augmented reality device. In some examples the user device could comprise an augmented reality headset or any other suitable type of device. The user device 105 can be configured so that a user can interact with the user device 105 using gesture inputs.

The sensors 119 can be configured to detect one or more inputs. The inputs can be gesture inputs made by a user of the user device 105. The gesture inputs could be movement of the user, movement of the user device 105, voice inputs or any other suitable type of input.

The sensors 119 can be configured to provide gesture data 405 as an output. The gesture data 405 indicates the gestures or potential gestures that have been detected by the sensors 119. The user device 105 can be configured to send the gesture data 405 to the processing device 103.

The network traffic sensors 403 can be configured to detect network traffic. The network traffic can comprise communication activity within a network 101. The network traffic activity can result from communications involving one or more network devices 107. The network devices 107 could be communicating with a processing device 103 and/or any other suitable device within the network 101.

The network traffic sensors 403 can comprise an antenna or any other suitable means for sensing network traffic. The antenna could by a 5G antenna, a WiFi antenna or any other suitable type of antenna. The network traffic sensors 403 can be configured to detect 5G signals, WiFi signals, Bluetooth signals, Bluetooth low energy signals or any other suitable type of signals.

The network traffic sensors 403 can be configured to detect characteristics of the signals such as number of data packets, length of data packets, timing of data packets, rise times of data packets, fall times of data packets or any other suitable features.

The network traffic sensors 403 can be configured to provide network traffic activity data 407 as an output. The network traffic activity data 407 indicates the network traffic activity that has been detected by the network traffic sensors 403. The user device 105 can be configured to send the network traffic activity data 407 to the processing device 103.

The processing device 103 can be a processing device 103 as shown in Fig. 1 or could be any other suitable type of processing device 103. In the example of Fig. 4 the processing device is a separate device to the user device 105. The gesture data 405 and the network traffic activity data 407 can be transmitted from the user device 105 to the processing device 103. In some examples the processing device 103 could be part of the user device 105. In some examples the processing device 103 could be a plurality of distributed devices and the gesture data 405 and the network traffic activity data 407 could be sent to appropriate locations to enable the processing of the data.

In the example of Fig. 4 the processing device 103 comprises a gesture data collection module 409 and a network traffic event detection module 411. The modules 409, 411 could be part of an apparatus 109 as shown in Fig. 1 or could be implemented using any other suitable means.

The gesture data 405 is provided as an input to the gesture data collection module 409. The gesture data collection module 409 provides means for collecting data relating to gesture user inputs that might have been detected by the user device 105.

The network traffic event detection module 411 provides means for analysing the network traffic activity data 407 and looking for a pattern or fingerprint indicative of a network traffic event.

A network traffic event can be a sequence of network traffic activity that indicates an action being performed by a network device 107. For example, a network traffic event could be a sequence of packages of particular sizes or other characteristics that are sent at particular times. The timings and/or other characteristics of the packages can be unique to a particular network device 107 performing a particular function. The timings and/or other characteristics of the packages can therefore provide a network traffic event that can be used to identify an action being performed by a network device 107.

The network traffic event detection module 411 can be configured to access a network traffic event database 413. The network traffic event database 413 can be stored in the processing devices 103 or could be stored in any other suitable location that is accessible by the processing device 103.

The network traffic event database 413 can be configured to store data relating to network traffic events. The network traffic event database 413 can store data relating to the patterns or sequences of network traffic that correspond to respective network events. The data relating to the patterns or sequences of network traffic that correspond to respective network events can be specific to a particular location or network. The data relating to the patterns or sequences of network traffic that correspond to respective network events can be generated by the processing device by monitoring the network traffic activity data and then can be transferred to the network traffic event database 413 for storage. The data relating to the patterns or sequences of network traffic that correspond to respective network events can be generated by the processing device 103 during a configuration phase or at any other suitable time.

In some examples the data relating to the patterns or sequences of network traffic that correspond to respective network events can be associated with one or more actions performed by one or more network devices 107. The action performed by the network device 107 that corresponds to the network event can be determined through information obtained by sensors that can detect outputs of the network devices 107, or by any other suitable means.

The network traffic event detection module 411 is configured so that if a match between the network traffic activity data 407 and the network traffic event data 415 is detected a trigger input 417 is provided from the network traffic event detection module 411 to the gesture data collection module 409. The trigger input 417 can indicate that a match between the network traffic activity data 407 and the network traffic event data 415 has been detected. The trigger input 417 can comprise an indication of the timing of the network event that has occurred.

The gesture data collection module 409 can be configured so that, in response to receiving the trigger input 417 the gesture data collected in a time period preceding the network traffic event is collected. The gesture data obtained for this time period can comprise user inputs made in the time interval before the detected network traffic activity that corresponds to the network traffic event. The gesture data obtained in the defined time period before the network event can be provided as an output of the gesture data collection module 409. The time period could be a predetermined period, for example ninety seconds before a network traffic event or could be any other suitable duration.

The output of the gesture data collection module 409 can comprise trigger gesture data 419. In some examples the trigger gesture data 419 can comprise all of the gesture data that is collected in the relevant time interval. In some examples the trigger gesture data 419 can comprise a subset of the gesture data that is collected in the relevant time interval. As the trigger gesture data comprises data 419 relating to user inputs that were detected in the time interval preceding the detected network traffic event the trigger gesture data 419 might comprise information indicative of a gesture input that caused the action by the one or more network devices 107 to be performed.

The system of Fig. 4 is configured so that the trigger gesture data 419 is provided as an input to a gesture database 421. The gesture database 421 is configured to store the trigger gesture data 419. The gesture database 421 is configured to be accessible by the processing device 103 and any other suitable components of the system 401.

The system of Fig. 4 also comprises a gesture classification module 423. The gesture classification module 423 can comprise any means that can be configured to implement a gesture classification algorithm. The gesture classification module 423 can be part of the processing device 103 or any other suitable device. In some examples the gesture classification module 423 could be implemented by one or more distributed devices.

In some examples the gesture classification module 423 can be configured to implement a classification algorithm to process the trigger gesture data 419 to detect patterns and define a gesture input that triggers a network traffic event. The classification algorithm could be a machine learning algorithm or any other suitable type of algorithm. Where a machine learning algorithm is used the algorithm can be pre-trained using labeled gesture data for known gesture user inputs or using any other suitable data.

The gesture classification module 423 provides pairing data 425 as an output. The pairing data can associate a gesture input with a network traffic event. That pairing data can indicate a gesture input that is input by a user of the user device 105 and is known to trigger an action to be performed by one or more network devices 107 so as to cause the corresponding network traffic event.

The pairing data 425 can be provided as an input to a pairing database 427. The pairing database 427 is accessible by the gesture classification module 423. The database 427 can be stored in the processing device 103 or in any other suitable location. The pairing database 427 that is created using the system as shown in Fig. 4 can be used in examples of the disclosure to help to determine a user intent of actions performed by network devices 107.

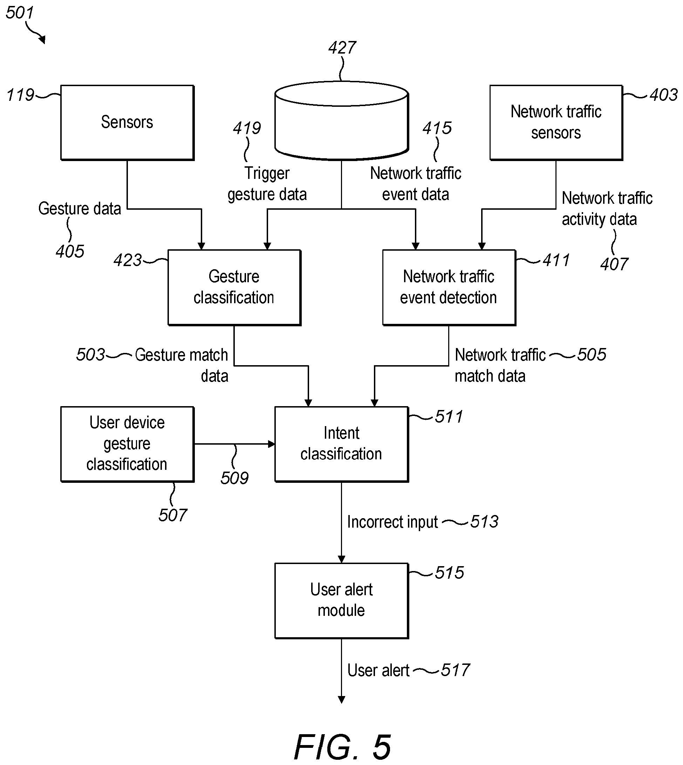

Fig. 5 shows another example system 501 that could be used to implement examples of the disclosure and determine a user intent of actions performed by network devices 107. The example system 501 of Fig. 5 comprises a plurality of different modules. The modules could be part of the user device 105, part of the processing device 103, or part of any other suitable device. In some examples one or more of the modules could be distributed across a plurality of different devices. Corresponding reference numerals are used for corresponding features that have been described previously.

The system of Fig. 5 comprises a pairing database 427. The pairing database 427 could be generated using the system of Fig, 4 or using any other suitable means or methods. The pairing database 427 comprises information that associates respective gesture inputs with corresponding network traffic events. The pairing database 427 is stored in a location so that it is accessible by appropriate modules within the system 501.

The system 501 of Fig. 5 also comprises one or more sensors 119. The sensors 119 could be part of a user device 105 or could be provided in any other suitable part of the network 101.

The sensors 119 can configured to detect one or more inputs. The inputs can be gesture inputs made by a user of the user device 105. The gesture inputs could be movement of the user, movement of the user device 105, voice inputs or any other suitable type of input.

The sensors 119 can be configured so that when a gesture user input is detected, gesture data 405 is provided as an output. The gesture data 405 indicates the gesture input that has been detected by the sensors 119. The user device 105 can be configured to send the gesture data 405 relating to the detected user input to the processing device 103.

The gesture data 405 is provided as an input to a gesture classification module 423. The gesture classification module 423 is also configured to retrieve trigger gesture data 419 from the pairing database 427. The trigger gesture data 419 can comprise gesture data that has been detected and associated with network traffic events as shown in Fig. 4 or using any other suitable process.

The gesture classification module 423 can comprise any means that can be configured to implement a gesture classification algorithm. The gesture classification module 423 can be part of the processing device 103 or any other suitable device. In some examples the gesture classification module 423 could be implemented by one or more distributed devices.

In some examples the gesture classification module 423 can be configured to implement a classification algorithm to process the trigger gesture data 419 to detect patterns and define a gesture input that triggers a network traffic event. The classification algorithm could be a machine learning algorithm or any other suitable type of algorithm. Where a machine learning algorithm is used the algorithm can be pre-trained using labeled gesture data for known gesture user inputs or using any other suitable data.

The gesture classification module 423 can compare the gesture data 405 with the trigger gesture data 419 to identify a level of correlation between the respective data. This can indicate a level of matching between the gesture data 405 and the trigger gesture data 419. This effectively compares the detected gesture user input with gesture user inputs that are known to be intended to cause a network device 107 to perform an action.

The gesture classification module 423 is configured to provide gesture match data 503 as an output. The gesture match data 503 can comprise a value that indicates the strength of a match between the gesture data 405 and the trigger gesture data 419. This provides an indication of how closely the gesture data 405 is matched with the trigger gesture data 419.

The system 501 also comprises one or more network traffic sensors 403. The network traffic sensors 403 could be part of the user device 105 or part of any other suitable part of the network 101.

The network traffic sensors 403 can be configured to detect network traffic 403. The network traffic can comprise communication activity within a network 101. The network traffic activity can result from communications involving one or more network devices 107. The network devices 107 could be communicating with a processing device 103 and/or any other suitable device within the network 101.

The network traffic sensors 403 can be configured to provide network traffic activity data 407 as an output. The network traffic activity data 407 indicates the network traffic activity that has been detected by the network traffic sensors 403. The user device 105 can be configured to send the network traffic activity data 407 to the processing device 103.

The network traffic activity data 407 is provided as an input to a network traffic event detection module 411. The network traffic event detection module 411 is also configured to retrieve network traffic event data 415 from the pairing database 427. The network traffic event data 415 can comprise data relating to network traffic activity and events that have been detected and associated with gesture inputs as shown in Fig. 4 or using any other suitable process.

The network traffic event detection module 411 can comprise any means that can be configured to assess a similarity between the detected network traffic activity and the network traffic activity that corresponds to a network traffic event. This can be used to infer whether or not a network device 107 is performing an action.

The network traffic event detection module 411 can be part of the processing device 103 or any other suitable device. In some examples the network traffic event detection module 411 could be implemented by one or more distributed devices.

In some examples the network traffic event detection module 411 can be configured to implement a classification algorithm to process the network traffic activity data 407 to detect patterns and define a pattern that corresponds to a network traffic event. The classification algorithm could be a machine learning algorithm or any other suitable type of algorithm. Where a machine learning algorithm is used the algorithm can be pre-trained using any suitable data sets.

The network traffic event detection module 411 can compare the network traffic activity data 407 with the network traffic event data 415 to identify a level of correlation between the respective data. This can indicate a level of matching between the network traffic activity data 407 and the network traffic event data 415. This effectively compares the detected network traffic activity with network traffic activity that is known to be caused by a network device 107 performing an action.

The network traffic event detection module 411 is configured to provide network traffic match data 505 as an output. The network traffic match data 505 can comprise a value that indicates the strength of a match between the network traffic activity data 407 and the network traffic event data 415. This provides an indication of how closely the network traffic activity data 407 is matched with the network traffic event data 415 which indicates an indication of the likelihood that the action being performed by the network devices 107 can be correctly identified.

The system 501 of Fig. 5 also comprises a user device gesture classification module 507. The user device gesture classification module 507 can be part of the user device 105 or could be part of any other suitable device within the network 101 or connected to the network.

The user device gesture classification module 507 can comprise any means that can be configured to assess the similarity between the gesture user input that has been detected by the user device 105 and the gesture user inputs that are used to control one or more functions of the user device 105. For example, the gesture data could be compared to gesture inputs that are used to control applications that one currently in use by the user or to enable any other suitable control of the user device 105.

Any suitable means or process can be used to assess the similarity between the gesture user input that has been detected by the user device 105 and the gesture user inputs that are used to control one or more functions of the user device 105. In some examples a classification algorithm can be used to assess the similarity between the gesture user input that has been detected by the user device 105 and the gesture user inputs that are used to control one or more functions of the user device 105.

The user device gesture classification module 507 can be configured to provide user device match data 509 as an output.

The user device match data 509 is provided as an input to an intent classification module 511. The intent classification module 511 can be part of a user device 105, part of a processing device 103 and/or part of any other suitable devices within the network 101 or connected to the network 101.

The intent classification module 511 receives the user device match data 509, the gesture match data 503, and the network traffic match data 505 as inputs. The intent classification module 511 can be configured to determine a user intent of the actions that have been performed by the network devices 107 and which correspond to the detected network traffic activity. That is, the intent classification module 511 can be configured to determine whether the input that the user made was intended to control the functions of the network device 107 or if they were intended to control one or more functions of the user deice 105. The intent classification module 511 can be configured to compare the identified gesture input with data relating to gesture user inputs and the network traffic activity that is stored in the pairing database 427.

In the example of Fig. 5 the intent classification module 511 can be configured to compare the value of the user device match data 509 with a value of the gesture match data 503 and the network traffic match data 505.

If the user device match data 509 is below a threshold or is lower than the gesture match data 503 and/or the network traffic match data 505 then it can be determined that the gesture input was not intended to control functions of the user device 105 but was intended to control a function of the network devices 107. In such cases the gesture input can be assumed to have been correctly interpreted and no further actions or interventions are needed from the system 501.

If the user device match data 509 is above a threshold or is higher than the gesture match data 503 and/or the network traffic match data 505 then it can be determined that the gesture input was intended to control functions of the user device 105 and not functions of the network devices 107. In such cases the gesture input can be assumed to have been incorrectly interpreted to cause the action of the network device 107. In such case an incorrect input detected notification 513 can be provided as an output of the intent classification module 511.

The incorrect input detected notification 513 can be provided to any suitable module or part of the network 101. In the example system 501 of Fig, 5 the incorrect input detection notification 513 is provided to a user alert module 515. The user alert can be configured to provide an output to the user of the user device 105 to indicate that an action of the network device 107 has been actuated unintentionally. The user alert module 515 can be configured to provide any suitable type of user alert 517 as an output. For example, the user alert could be provided as a visual alert on a display or an audible alert via a loudspeaker.

In some examples, if it has been determined that a detected gesture input has caused an unintended action then the user device 105 could be configured to enable a user to change the user inputs that are used to control the user device and/or the network device 107 so as to decrease the similarity between the respective gesture inputs. This could reduce the likelihood of the unintentional actions being performed in future use scenarios of the user device 105.

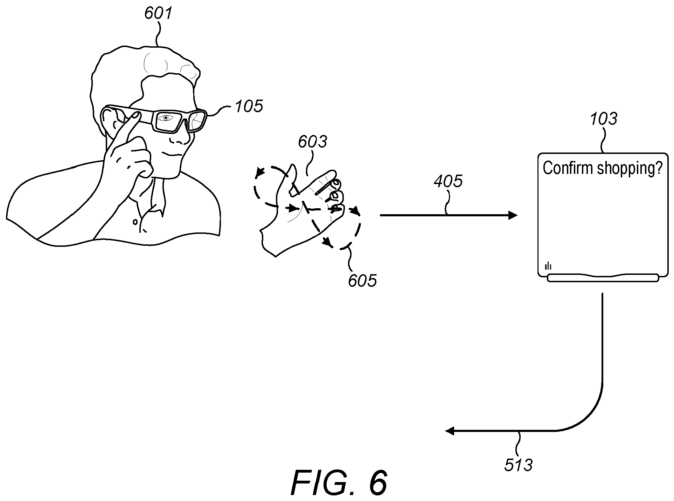

Fig. 6 shows an example user device 105 in use according to examples of the disclosure. The user device 105 in this example is a pair of augmented reality glasses. The user 601 is wearing the augmented reality glasses.

The user makes a gesture user input by moving their hand 603 as in a figure of eight motion as indicated by the arrows 605. Other user inputs and types of gestures could be used in other examples. The gesture user input can be detected using any suitable sensors 119 of the user device 105. The sensors 119 are not shown in Fig. 6. The sensors 119 could comprise LiDAR sensors or any other suitable types of sensors. The user device 105 can be configured to provide gesture data 405 indicative of the detected gesture input to a processing device 103.

The processing device 103 can also obtain network traffic activity data 407. The processing device can use the obtained network traffic activity data to determine whether or not a network action has been activated.

If a network action has been activated the processing device 103 can use the examples of the disclosure to determine if this was intentional or not. The processing device compares the gesture data with gestures for controlling the network devices and gestures for controlling the user device 105. If the gestures are more closely matched to gestures for controlling the user device 105 then it can be assumed that the actions of the network device 107 have been actuated incorrectly because the gesture input was not intended for the control of the network device 107.

If is determined that the action of the network device was not intended to be activated by the user 601 then an incorrect input notification is transmitted from the processing device 103 to the user device 105. This can enable the user device 105 to provide an alert to the user 601 indicating that a network device 107 has been actuated unintentionally.

In some examples the user device 105, or other devices in the network, could be configured to enable a user to change the gesture user inputs that are used so that there is a reduced chance of the network device 107 being actuated unintentionally.

In some examples interaction locations for other devices within the network could be changed. For example, an interaction location for a network device 107 could be locations where the network device 107 detects user inputs. These could be moved to a different location so as to avoid overlap with the region around the user device 105.

In the example of Fig. 6 a processing device 103 is configured to perform the processing to determine if the network device 107 has been activated unintentionally. In other examples other devices or group of devices could be used to perform the processing or role of the processing device.

Fig. 7 schematically illustrates an apparatus 109/113 that can be used to implement examples of the disclosure. In this example the apparatus 109/113 comprises a controller 701. The controller 701 can be a chip or a chip-set. In some examples the controller 701 can be provided within a communications device or any other suitable type of device.

In the example of Fig. 7 the implementation of the controller 701 can be as controller circuitry. In some examples the controller 701 can be implemented in hardware alone, have certain aspects in software including firmware alone or can be a combination of hardware and software (including firmware).

As illustrated in Fig. 7 the controller 701 can be implemented using instructions that enable hardware functionality, for example, by using executable instructions of a computer program 707 in a general-purpose or special-purpose processor 703 that may be stored on a computer readable storage medium (disk, memory etc.) to be executed by such a processor 703.

The processor 703 is configured to read from and write to the memory 705. The processor 703 can also comprise an output interface via which data and/or commands are output by the processor 703 and an input interface via which data and/or commands are input to the processor 703.

The memory 705 stores a computer program 707 comprising computer program instructions (computer program code) that controls the operation of the controller 701 when loaded into the processor 703. The computer program instructions, of the computer program 707, provide the logic and routines that enables the controller 701. to perform the methods illustrated in the accompanying Figs. The processor 703 by reading the memory 705 is able to load and execute the computer program 707.

The apparatus 109/113 comprises:
at least one processor 703; and
at least one memory 705 storing instructions that, when executed by the at least one processor, cause the apparatus at least to perform:
   detecting 201 network traffic activity wherein the network traffic activity is indicative of one or more actions performed by at least one network device;
   identifying 203 a user input made by a user of a user device wherein the at least one network device is different to the user device and wherein the user input is made in a time interval before the detected network traffic activity;
   determining 205 a user intent of the one or more actions performed by the at least one network device by comparing the identified user input and detected network traffic activity with data relating to user inputs and associated expected network traffic activity stored in a database, wherein determining the user intent comprises comparing the identified user input with a first user input for controlling the user device and a second user input for controlling at least the at least one network device so as to generate the detected network traffic activity to determine whether the identified user input is more closely matched to the first user input or the second user input; and
   controlling 207 an output of the user device based on the determined user intent.

In some examples an apparatus 113 could be configured for use in a user device 105. In such examples the apparatus 109 comprises:
at least one processor 703; and
at least one memory 705 storing instructions that, when executed by the at least one processor, cause the apparatus at least to perform:
   collecting 301 data relating to detected user inputs;
   providing 303 collected data relating to detected user inputs to at least one processing device to enable the collected data to be analysed to determine a user intent; and
   receiving 305 an input based on the determined user intent.

As illustrated in Fig. 7, the computer program 707 can arrive at the controller 701 via any suitable delivery mechanism 711. The delivery mechanism 711 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 707. The delivery mechanism can be a signal configured to reliably transfer the computer program 707. The controller 701 can propagate or transmit the computer program 707 as a computer data signal. In some examples the computer program 707 can be transmitted to the controller 701 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 707 comprises computer program instructions for causing an apparatus 109/113 to perform at least the following or for performing at least the following:
detecting 201 network traffic activity wherein the network traffic activity is indicative of one or more actions performed by at least one network device;
identifying 203 a user input made by a user of a user device wherein the at least one network device is different to the user device and wherein the user input is made in a time interval before the detected network traffic activity;
determining 205 a user intent of the one or more actions performed by the at least one network device by comparing the identified user input and detected network traffic activity with data relating to user inputs and associated expected network traffic activity stored in a database, wherein determining the user intent comprises comparing the identified user input with a first user input for controlling the user device and a second user input for controlling at least the at least one network device so as to generate the detected network traffic activity to determine whether the identified user input is more closely matched to the first user input or the second user input; and
controlling 207 an output of the user device based on the determined user intent.

If the computer program 707 is for a user device 105 the computer program 707 can comprise computer program instructions for causing an apparatus 113 to perform at least the following or for performing at least the following:
collecting 301 data relating to detected user inputs;
providing 303 collected data relating to detected user inputs to at least one processing device to enable the collected data to be analysed to determine a user intent; and
receiving 305 an input based on the determined user intent.

The computer program instructions can be comprised in a computer program 707, a non-transitory computer readable medium, a computer program product, a machine readable medium. In some but not necessarily all examples, the computer program instructions can be distributed over more than one computer program 707.

Although the memory 705 is illustrated as a single component/circuitry it can be implemented as one or more separate components/circuitry some or all of which can be integrated/removable and/or can provide permanent/semi-permanent/ dynamic/cached storage.

Although the processor 703 is illustrated as a single component/circuitry it can be implemented as one or more separate components/circuitry some or all of which can be integrated/removable. The processor 703 can be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Fig. 2 can represent steps in a method and/or sections of code in the computer program 707. The illustration of a particular order to the blocks does not necessarily imply that there is a required or preferred order for the blocks and the order and arrangement of the blocks can be varied.

The apparatus 109/113 can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus 109/113 can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description.

Whilst endeavoring in the foregoing specification to draw attention to those features believed to be of importance it should be understood that the the scope of the present invention is defined by the appended claims.

## Claims

1. An apparatus (109) **characterised by** comprising means for:
detecting (201) network traffic activity wherein the network traffic activity is indicative of one or more actions performed by at least one network device (107);
identifying (203) a user input made by a user of a user device (105) wherein the at least one network device (107) is different to the user device (105) and wherein the user input is made in a time interval before the detected network traffic activity;
determining (205) a user intent of the one or more actions performed by the at least one network device (107) by comparing the identified user input and detected network traffic activity with data relating to user inputs and associated expected network traffic activity stored in a database, wherein determining (205) the user intent comprises comparing the identified user input with a first user input for controlling the user device (105) and a second user input for controlling at least the at least one network device (107) so as to generate the detected network traffic activity to determine whether the identified user input is more closely matched to the first user input or the second user input; and
controlling (207) an output of the user device (105) based on the determined user intent.

2. An apparatus as claimed in claim 1 wherein the output comprises at least one of: enabling a user input used to control an action of the user device to be changed to a different user input, providing an alert to the user of the user device indicative of an action being determined as unintentional.

3. An apparatus as claimed in claim 2 wherein the output is configured to provide one or more suggested user inputs that have a similarity level below a threshold compared to the identified user input.

4. An apparatus as claimed in any preceding claim wherein the user input is identified by comparing user inputs made in the time interval before the detected network traffic activity to the data relating to user inputs that is stored in a database.

5. An apparatus as claimed in any preceding claim wherein the user input comprises at least one of; a voice input, a gesture input.

6. An apparatus as claimed in any preceding claim wherein the detected network traffic activity comprises one or more of: number of data packets, length of data packets, timing of data packets, rise times of data packets, fall times of data packets.

7. An apparatus as claimed in any preceding claim wherein the detected network traffic activity comprises one or more of: 5G signals, WiFi signals, Bluetooth signals, Bluetooth low energy signals.

8. An apparatus as claimed in any preceding claim wherein the means are for identifying the one or more actions corresponding to the detected network traffic activity by comparing the detected network traffic activity with one or more network traffic activity profiles.

9. An apparatus as claimed in any preceding claim wherein the means are for identifying a network device based on the detected network traffic activity.

10. An apparatus as claimed in any preceding claim wherein a machine learning model is used to determine the user intent.

11. An apparatus as claimed in any preceding claim wherein the user device comprises a mediated reality device.

12. A method **characterised by**:
detecting (201) network traffic activity wherein the network traffic activity is indicative of one or more actions performed by at least one network device (107);
identifying (203) a user input made by a user of a user device (105) wherein the at least one network device (107) is different to the user device (105) and wherein the user input is made in a time interval before the detected network traffic activity;
determining (205) a user intent of the one or more actions performed by the at least one network device (107) by comparing the identified user input and detected network traffic activity with data relating to user inputs and associated expected network traffic activity stored in a database, wherein determining (205) a user intent comprises comparing the identified user input with a first user input for controlling the user device (105) and a second user input for controlling at least the at least one network device (107) so as to generate the detected network traffic activity to determine whether the identified user input is more closely matched to the first user input or the second user input; and
controlling (207) an output of the user device (105) based on the determined user intent.

13. A computer program **characterised by** comprising computer program instructions that, when executed by processing circuitry, cause:
detecting (201) network traffic activity wherein the network traffic activity is indicative of one or more actions performed by at least one network device (107);
identifying (203) a user input made by a user of a user device wherein the at least one network device (107) is different to the user device (105) and wherein the user input is made in a time interval before the detected network traffic activity;
determining (205) a user intent of the one or more actions performed by the at least one network device (107) by comparing the identified user input and detected network traffic activity with data relating to user inputs and associated expected network traffic activity stored in a database, wherein determining (205) a user intent comprises comparing the identified user input with a first user input for controlling the user device (105) and a second user input for controlling at least the at least one network device (107) so as to generate the detected network traffic activity to determine whether the identified user input is more closely matched to the first user input or the second user input; and
controlling (207) an output of the user device (105) based on the determined user intent.

14. A system (401) comprising: a processing device (103) comprising an apparatus (109) as claimed in any of claims 1 to 11; and the system (401) further comprising a user device (105) comprising means for:
collecting (301) data relating to detected user inputs;
providing (303) the collected data relating to detected user inputs to the processing device (103) to enable the collected data to be analysed to determine a user intent; and
receiving (305) an input based on the determined user intent.

## Patentansprüche

1. Einrichtung (109), **dadurch gekennzeichnet, dass** sie Mittel für Folgendes umfasst:
Detektieren (201) einer Netzwerkverkehrsaktivität, wobei die Netzwerkverkehrsaktivität eine oder mehrere Aktionen anzeigt, die von mindestens einer Netzwerkvorrichtung (107) durchgeführt werden;
Identifizieren (203) einer Benutzereingabe, die von einem Benutzer einer Benutzervorrichtung (105) gemacht wird, wobei sich die mindestens eine Netzwerkvorrichtung (107) von der Benutzervorrichtung (105) unterscheidet und wobei die Benutzereingabe in einem Zeitintervall vor der detektierten Netzwerkverkehrsaktivität gemacht wird;
Bestimmen (205) einer Benutzerabsicht der einen oder der mehreren Aktionen, die von der mindestens einen Netzwerkvorrichtung (107) durchgeführt werden, durch Vergleichen der identifizierten Benutzereingabe und der detektierten Netzwerkverkehrsaktivität mit Daten, die sich auf Benutzereingaben und eine verknüpfte erwartete Netzwerkverkehrsaktivität beziehen und die in einer Datenbank gespeichert sind, wobei das Bestimmen (205) der Benutzerabsicht das Vergleichen der identifizierten Benutzereingabe mit einer ersten Benutzereingabe zum Steuern der Benutzervorrichtung (105) und einer zweiten Benutzereingabe zum Steuern mindestens der mindestens einen Netzwerkvorrichtung (107) umfasst, um die detektierte Netzwerkverkehrsaktivität zu erzeugen, um zu bestimmen, ob die identifizierte Benutzereingabe mehr mit der ersten Benutzereingabe oder der zweiten Benutzereingabe übereinstimmt; und
Steuern (207) einer Ausgabe der Benutzervorrichtung (105) auf Basis der bestimmten Benutzerabsicht.

2. Einrichtung nach Anspruch 1, wobei die Ausgabe mindestens eines von Folgendem umfasst: Ermöglichen, dass eine Benutzereingabe, die zum Steuern einer Aktion der Benutzervorrichtung verwendet wird, in eine andere Benutzereingabe geändert wird, Bereitstellen einer Warnung für den Benutzer der Benutzervorrichtung, die anzeigt, dass eine bestimmte Aktion nicht beabsichtigt ist.

3. Einrichtung nach Anspruch 2, wobei die Ausgabe dazu ausgelegt ist, eine oder mehrere vorgeschlagene Benutzereingaben bereitzustellen, die verglichen mit der identifizierten Benutzereingabe ein Ähnlichkeitsmaß unter einem Schwellwert aufweisen.

4. Einrichtung nach einem der vorhergehenden Ansprüche, wobei die Benutzereingabe durch Vergleichen von Benutzereingaben, die im Zeitintervall vor der detektierten Netzwerkverkehrsaktivität gemacht wurden, mit den Daten, die sich auf die Benutzereingaben beziehen und in einer Datenbank gespeichert sind, identifiziert wird.

5. Einrichtung nach einem der vorhergehenden Ansprüche, wobei die Benutzereingabe mindestens eines von: einer Spracheingabe, einer Gesteneingabe umfasst.

6. Einrichtung nach einem der vorhergehenden Ansprüche, wobei die detektierte Netzwerkverkehrsaktivität eines oder mehreres von Folgendem umfasst: einer Anzahl von Datenpaketen, einer Länge von Datenpaketen, eines Timing von Datenpaketen, Anstiegszeiten von Datenpaketen, Abfallzeiten von Datenpaketen.

7. Einrichtung nach einem der vorhergehenden Ansprüche, wobei die detektierte Netzwerkverkehrsaktivität eines oder mehreres von Folgendem umfasst: 5G-Signale, WiFi-Signale, Bluetoothsignale, Bluetoothniedrigenergiesignale.

8. Einrichtung nach einem der vorhergehenden Ansprüche, wobei die Mittel dem Identifizieren der einen oder der mehreren Aktionen, die der detektierten Netzwerkverkehrsaktivität entsprechen, durch Vergleichen der detektierten Netzwerkverkehrsaktivität mit einem oder mehreren Netzwerkverkehrsaktivitätsprofilen dienen.

9. Einrichtung nach einem der vorhergehenden Ansprüche, wobei die Mittel dem Identifizieren einer Netzwerkvorrichtung auf Basis der detektierten Netzwerkverkehrsaktivität dienen.

10. Einrichtung nach einem der vorhergehenden Ansprüche, wobei ein Maschinenlernmodell verwendet wird, um die Benutzerabsicht zu bestimmen.

11. Einrichtung nach einem der vorhergehenden Ansprüche, wobei die Benutzervorrichtung eine Vorrichtung einer vermittelten Realität umfasst.

12. Verfahren, **gekennzeichnet durch**:
Detektieren (201) einer Netzwerkverkehrsaktivität, wobei die Netzwerkverkehrsaktivität eine oder mehrere Aktionen anzeigt, die von mindestens einer Netzwerkvorrichtung (107) durchgeführt werden;
Identifizieren (203) einer Benutzereingabe, die von einem Benutzer einer Benutzervorrichtung (105) gemacht wird, wobei sich die mindestens eine Netzwerkvorrichtung (107) von der Benutzervorrichtung (105) unterscheidet und wobei die Benutzereingabe in einem Zeitintervall vor der detektierten Netzwerkverkehrsaktivität gemacht wird;
Bestimmen (205) einer Benutzerabsicht der einen oder der mehreren Aktionen, die von der mindestens einen Netzwerkvorrichtung (107) durchgeführt werden, durch Vergleichen der identifizierten Benutzereingabe und der detektierten Netzwerkverkehrsaktivität mit Daten, die sich auf Benutzereingaben und eine verknüpfte erwartete Netzwerkverkehrsaktivität beziehen und die in einer Datenbank gespeichert sind, wobei das Bestimmen (205) einer Benutzerabsicht das Vergleichen der identifizierten Benutzereingabe mit einer ersten Benutzereingabe zum Steuern der Benutzervorrichtung (105) und einer zweiten Benutzereingabe zum Steuern mindestens der mindestens einen Netzwerkvorrichtung (107) umfasst, um die detektierte Netzwerkverkehrsaktivität zu erzeugen, um zu bestimmen, ob die identifizierte Benutzereingabe mehr mit der ersten Benutzereingabe oder der zweiten Benutzereingabe übereinstimmt; und
Steuern (207) einer Ausgabe der Benutzervorrichtung (105) auf Basis der bestimmten Benutzerabsicht.

13. Computerprogramm, **gekennzeichnet durch** Umfassen von Computerprogrammanweisungen, die, wenn sie von einer Verarbeitungsschaltung ausgeführt werden, Folgendes veranlassen:
Detektieren (201) einer Netzwerkverkehrsaktivität, wobei die Netzwerkverkehrsaktivität eine oder mehrere Aktionen anzeigt, die von mindestens einer Netzwerkvorrichtung (107) durchgeführt werden;
Identifizieren (203) einer Benutzereingabe, die von einem Benutzer einer Benutzervorrichtung gemacht wird, wobei sich die mindestens eine Netzwerkvorrichtung (107) von der Benutzervorrichtung (105) unterscheidet und wobei die Benutzereingabe in einem Zeitintervall vor der detektierten Netzwerkverkehrsaktivität gemacht wird;
Bestimmen (205) einer Benutzerabsicht der einen oder der mehreren Aktionen, die von der mindestens einen Netzwerkvorrichtung (107) durchgeführt werden, durch Vergleichen der identifizierten Benutzereingabe und der detektierten Netzwerkverkehrsaktivität mit Daten, die sich auf Benutzereingaben und eine verknüpfte erwartete Netzwerkverkehrsaktivität beziehen und die in einer Datenbank gespeichert sind, wobei das Bestimmen (205) einer Benutzerabsicht das Vergleichen der identifizierten Benutzereingabe mit einer ersten Benutzereingabe zum Steuern der Benutzervorrichtung (105) und einer zweiten Benutzereingabe zum Steuern mindestens der mindestens einen Netzwerkvorrichtung (107) umfasst, um die detektierte Netzwerkverkehrsaktivität zu erzeugen, um zu bestimmen, ob die identifizierte Benutzereingabe mehr mit der ersten Benutzereingabe oder der zweiten Benutzereingabe übereinstimmt; und
Steuern (207) einer Ausgabe der Benutzervorrichtung (105) auf Basis der bestimmten Benutzerabsicht.

14. System (401), das Folgendes umfasst:
eine Verarbeitungsvorrichtung (103), die eine Einrichtung (109) nach einem der Ansprüche 1 bis 11 umfasst; und
wobei das System (401) ferner eine Benutzervorrichtung (105) umfasst, die Mittel zum :
Sammeln (301) von Daten umfasst, die sich auf detektierte Benutzereingaben beziehen;
Bereitstellen (303) der gesammelten Daten, die sich auf detektierte Benutzereingaben beziehen, für die Verarbeitungsvorrichtung (103) um es zu ermöglichen, dass sie gesammelten Daten analysiert werden, um eine Benutzerabsicht zu bestimmen; und
Empfangen (305) einer Eingabe auf Basis der bestimmten Benutzerabsicht.

## Revendications

1. Appareil (109) **caractérisé en ce qu'**il comprend des moyens pour :
détecter (201) une activité de trafic réseau, dans lequel l'activité de trafic réseau indique une ou plusieurs actions effectuées par au moins un dispositif réseau (107) ;
identifier (203) une entrée utilisateur effectuée par un utilisateur d'un dispositif utilisateur (105), dans lequel l'au moins un dispositif réseau (107) est différent du dispositif utilisateur (105), et dans lequel l'entrée utilisateur est effectuée dans un intervalle de temps précédant l'activité de trafic réseau détectée ;
déterminer (205) une intention d'utilisateur des une ou plusieurs actions effectuées par l'au moins un dispositif réseau (107) en comparant l'entrée utilisateur identifiée et l'activité de trafic réseau détectée avec des données relatives aux entrées utilisateur et une activité de trafic réseau attendue associée stockées dans une base de données, dans lequel la détermination (205) de l'intention d'utilisateur comprend la comparaison de l'entrée utilisateur identifiée avec une première entrée utilisateur pour commander le dispositif utilisateur (105) et une deuxième entrée utilisateur pour commander au moins l'au moins un dispositif réseau (107), de sorte à générer l'activité de trafic réseau détectée pour déterminer si l'entrée utilisateur identifiée concorde plus avec la première entrée utilisateur ou avec la deuxième entrée utilisateur ; et
commander (207) une sortie du dispositif utilisateur (105) sur la base de l'intention d'utilisateur déterminée.

2. Appareil selon la revendication 1, dans lequel la sortie comprend au moins une des opérations suivantes : permettre de changer une entrée utilisateur utilisée pour commander une action du dispositif utilisateur en une entrée utilisateur différente, fournir une alerte à l'utilisateur du dispositif utilisateur indiquant une action déterminée comme étant non intentionnelle.

3. Appareil selon la revendication 2, dans lequel la sortie est configurée pour fournir une ou plusieurs entrées utilisateur suggérées dont le niveau de similarité est en dessous d'un seuil en comparaison avec l'entrée utilisateur identifiée.

4. Appareil selon l'une des revendications précédentes, dans lequel l'entrée utilisateur est identifiée en comparant des entrées utilisateur effectuées dans l'intervalle de temps précédant l'activité de trafic réseau détectée aux données relatives à des entrées utilisateur qui sont stockées dans une base de données.

5. Appareil selon l'une des revendications précédentes, dans lequel l'entrée utilisateur comprend au moins une parmi : une entrée vocale, une entrée gestuelle.

6. Appareil selon l'une des revendications précédentes, dans lequel l'activité de trafic réseau détectée comprend un ou plusieurs parmi : un nombre de paquets de données, une longueur de paquets de données, une temporisation de paquets de données, des temps de montée de paquets de données, des temps de descente de paquets de données.

7. Appareil selon l'une des revendications précédentes, dans lequel l'activité de trafic réseau détectée comprend un ou plusieurs parmi : des signaux 5G, des signaux Wifi, des signaux Bluetooth, des signaux Bluetooth basse consommation.

8. Appareil selon l'une des revendications précédentes, dans lequel les moyens sont destinés à identifier les une ou plusieurs actions correspondant à l'activité de trafic réseau détectée en comparant l'activité de trafic réseau détectée avec un ou plusieurs profils d'activité de trafic réseau.

9. Appareil selon l'une des revendications précédentes, dans lequel les moyens sont destinés à identifier un dispositif réseau sur la base de l'activité de trafic réseau détectée.

10. Appareil selon l'une des revendications précédentes, dans lequel un modèle d'apprentissage machine est utilisé pour déterminer l'intention d'utilisateur.

11. Appareil selon l'une des revendications précédentes, dans lequel le dispositif utilisateur comprend un dispositif de réalité médiée.

12. Procédé **caractérisé par** les opérations suivantes :
détecter (201) une activité de trafic réseau, dans lequel l'activité de trafic réseau indique une ou plusieurs actions effectuées par au moins un dispositif réseau (107) ;
identifier (203) une entrée utilisateur effectuée par un utilisateur d'un dispositif utilisateur (105), dans lequel l'au moins un dispositif réseau (107) est différent du dispositif utilisateur (105), et dans lequel l'entrée utilisateur est effectuée dans un intervalle de temps précédant l'activité de trafic réseau détectée ;
déterminer (205) une intention d'utilisateur des une ou plusieurs actions effectuées par l'au moins un dispositif réseau (107) en comparant l'entrée utilisateur identifiée et l'activité de trafic réseau détectée avec des données relatives aux entrées utilisateur et une activité de trafic réseau attendue associée stockées dans une base de données, dans lequel la détermination (205) d'une intention d'utilisateur comprend la comparaison de l'entrée utilisateur identifiée avec une première entrée utilisateur pour commander le dispositif utilisateur (105) et une deuxième entrée utilisateur pour commander au moins l'au moins un dispositif réseau (107), de sorte à générer l'activité de trafic réseau détectée pour déterminer si l'entrée utilisateur identifiée concorde plus avec la première entrée utilisateur ou avec la deuxième entrée utilisateur ; et
commander (207) une sortie du dispositif utilisateur (105) sur la base de l'intention d'utilisateur déterminée.

13. Programme informatique **caractérisé en ce qu'**il comprend des instructions de programme informatique qui, lorsqu'elles sont exécutées par une circuiterie de traitement, provoquent les opérations suivantes :
détecter (201) une activité de trafic réseau, dans lequel l'activité de trafic réseau indique une ou plusieurs actions effectuées par au moins un dispositif réseau (107) ;
identifier (203) une entrée utilisateur effectuée par un utilisateur d'un dispositif utilisateur dans lequel l'au moins un dispositif réseau (107) est différent du dispositif utilisateur (105), et dans lequel l'entrée utilisateur est effectuée dans un intervalle de temps précédant l'activité de trafic réseau détectée ;
déterminer (205) une intention d'utilisateur des une ou plusieurs actions effectuées par l'au moins un dispositif réseau (107) en comparant l'entrée utilisateur identifiée et l'activité de trafic réseau détectée avec des données relatives aux entrées utilisateur et une activité de trafic réseau attendue associée stockées dans une base de données, dans lequel la détermination (205) d'une intention d'utilisateur comprend la comparaison de l'entrée utilisateur identifiée avec une première entrée utilisateur pour commander le dispositif utilisateur (105) et une deuxième entrée utilisateur pour commander au moins l'au moins un dispositif réseau (107), de sorte à générer l'activité de trafic réseau détectée pour déterminer si l'entrée utilisateur identifiée concorde plus avec la première entrée utilisateur ou avec la deuxième entrée utilisateur ; et
commander (207) une sortie du dispositif utilisateur (105) sur la base de l'intention d'utilisateur déterminée.

14. Système (401) comprenant :
un dispositif de traitement (103) comprenant un appareil (109) selon l'une des revendications 1 à 11 ; et
le système (401) comprenant en outre un dispositif utilisateur (105) comprenant des moyens pour :
collecter (301) des données relatives à des entrées utilisateur détectées ;
fournir (303) les données collectées relatives à des entrées utilisateur détectées au dispositif de traitement (103) pour permettre d'analyser des données collectées pour déterminer une intention d'utilisateur ; et
recevoir (305) une entrée sur la base de l'intention d'utilisateur déterminée.
